# EUROPEAN PATENT APPLICATION

(11) **EP 1 051 041 A1**
(43) Date of publication of application: **08.11.2000**
(21) Application number: 99109051.5
(22) Date of filing: 07.05.1999
(51) Int. Cl.: H04N 7/50, H04N 7/62

(54) **Method for searching start codes**

(71) Applicant: DEUTSCHE THOMSON-BRANDT GMBH, 78048 Villingen-Schwenningen (DE)
(72) Inventor: Winter, Marco, 30173 Hannover (DE); Kochale, Axel, 31832 Springe (DE); Ostermann, Ralf, 30451 Hannover (DE)
(74) Representative: Hartnack, Wolfgang, Dipl.-Ing.

(57) **Abstract**

In methods used for coding audio-visual information start codes provide a mechanism for easily searching coded bitstreams e.g. for the beginning of pictures etc. and a mechanism for resynchronization in the presense of bit errors. This is achieved by using a unique code for the start codes i.e. a specific bit pattern that does not otherwise occur in the data stream. Known implementations of MPEG start code parser investigates each byte of the incoming stream to search for the start code. This requires a lot of time and, if performed by a processor, needs a lot of the performance of the processor, which is missed for other tasks. According to the invention the start code search is divided into a rough search step (R) and a fine search step (F), wherein the fine search step (F) is only performed, if the rough search step (R) detects a certain value for an investigated byte.

## Description

The invention relates to a method for searching start codes in a data stream, especially in an MPEG data stream.

### Prior art

In methods used for coding audio-visual information in a digital compressed format like MPEG-1, MPEG-2 and MPEG-4 start codes provide a mechanism for easily searching coded bitstreams e.g. for the beginning of pictures, group of pictures etc. Start codes also provide a mechanism for resynchronization in the presense of bit errors. This is achieved by using a unique code for the start codes i.e. a specific bit pattern that does not otherwise occur in the data stream.

For MPEG-2 Video as specified in ISO 13818-2 each start code consists of a start code prefix followed by a start code value. The start code prefix is a string of 23 bits with the value 0 followed by a single bit with the value 1. The start code value is an eight bit integer which identifies the type of start code. The most start codes have just one start code value. However, a slice start code is represented by many start code values, because in this case the start code value is the vertical position of the slice.

Known implementations of MPEG start code parser investigates each byte of the incoming stream to search for a start code. This requires a lot of time and, if performed by a processor, needs a lot of the performance of the processor, which is missed for other tasks.

### Invention

The invention is based on the object of specifying a method for searching start codes in a data stream which is faster or less performance consuming. This object is achieved by means of the method specified in claim 1.

In principle, the method for searching start codes in a data stream of coded audio and/or visual information in digital compressed format, consists in the fact that the search includes a rough search step and a fine search step, wherein the fine search step is only performed, if the rough search step detects a predefined structure of a partition of the data stream.

In an advantageous manner, the rough search step investigates each n-th byte of the data stream and the fine search step investigates each m-th byte of the data stream and that n, m are integers with n>m.

In this case, it may be particularly advantageous if the values of n, m are n>=2 and m=1.

In a further advantageous development the rough search step uses the property of MPEG start codes to begin with three bytes having the values 0, 0 and 1.

In this case, it may be particularly advantageous if a search for a picture start code of an MPEG stream is performed by using the property of the picture start code to consist of a byte sequence of the values 0, 0, 1 and 0.

Also, it may be particularly advantageous if a search for the start code of the first slice of a MPEG picture is performed by using the property of the slice start code to consist of a byte sequence of the values 0, 0, 1 and 1.

Furthermore, it may be particularly advantageous if a search for a special start code of an MPEG stream is performed by using the property of this special start code to consist of a byte sequence of the values 0, 0, 1 and X, wherein X is one of the possible MPEG start code values greater or equal to 2.

### Drawing

Exemplary embodiments of the invention are described with reference to the figures. These show in:
- Figure 1: a first search method using the property of the start code to contain two leading 0-bytes;
- Figure 2: a second search method using the property of the start code to consist of two leading 0-bytes and a following byte with the value 1;
- Figure 3: a third search method using the property of the start code to consist of a byte sequence of the values 0, 0, 1 and 0;
- Figure 4: a fourth search method which results by modifications of the third search method and which is more complex but faster;
- Figure 5: a fifth search method using the property of the start code to consist of a byte sequence of the values 0, 0, 1 and 1;
- Figure 6: a sixth search method using the property of the start code to consist of a byte sequence of the values 0, 0, 1 and X, wherein X is greater or equal to 2;
- Figure 7: a seventh search method which results by modifications of the first search method.

### Exemplary embodiments

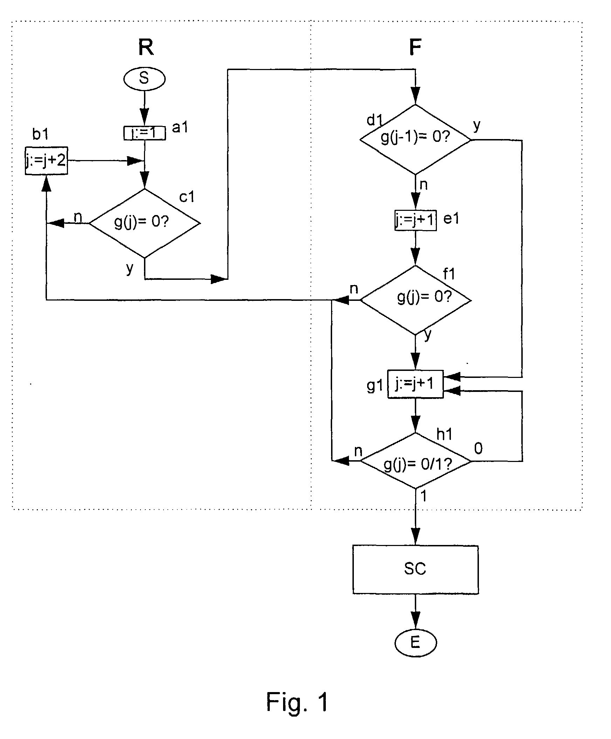

Figure 1 illustrates the method according to the invention for searching start codes using the property of the start code to contain two leading 0-bytes.

The parsing is separated into a rough search step R and a fine search step F. The rough search step investigates only each second byte of the incoming stream and uses the property of MPEG start codes to start with two 0-bytes. The fine search step investigates each byte of the incoming stream.

After start S of the parsing process the following substeps are performed in the rough search step. First of all in substep a1 a variable j (j=0,1,2,..) is set to 1. In substep b1, which is skipped in the initial run of the rough search step, the value of j is incremented by 2. In substep c1 the condition of g(j) is checked, wherein g(j) is the j-th byte from the MPEG stream (g(0) is the first byte from the MPEG stream). If g(j) is equal to 0 the fine search step is started, otherwise the process is continued in substep b1 and the value of g(j) is checked again and so on until g(j) is equal to 0.

In the first substep d1 of fine search step F the value of g(j-1) is checked. If g(j-1) is equal to 0 the search method is continued in substep g1. Otherwise j is incremented by 1 in substep e1 and g(j) is compared to 0 in substep f1. If g(j) is not equal to 0 the search method is continued in substep b1 of the rough search step, otherwise j is incremented by 1 in substep g1. The value of the next byte g(j) is checked in substep h1. If g(j) is equal to 0 the process is continued in substep g1, if g(j) is neither equal to 0 nor equal to 1 the process is continued in substep b1 of the rough search step. Finally, if g(j) is equal to 1 a start code is detected in substep SC, wherein g(j+1) is the start code value of this start code and the end E of parsing is reached.

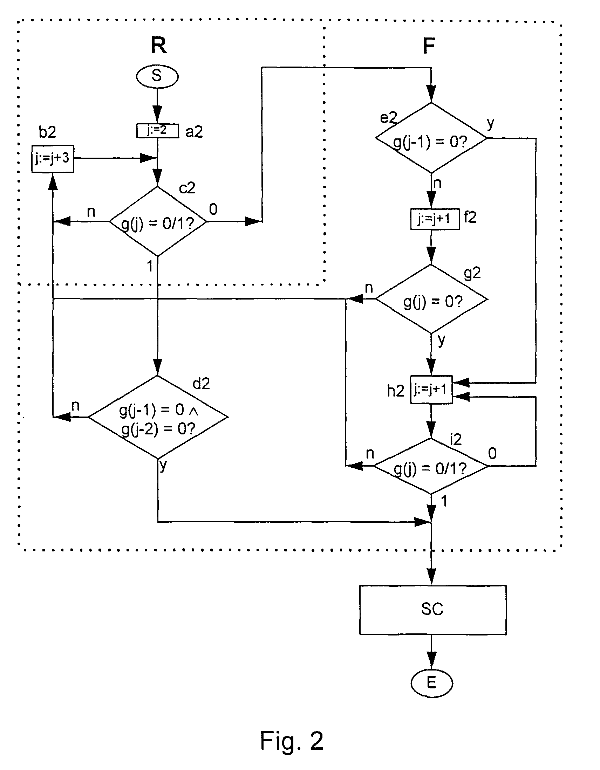

Figure 2 illustrates a method using the property of the start code to consist of two leading 0-bytes and a following byte with the value 1.

After start S in the rough search step R the value of j is set to 2 in the first substep a1. In the first run the substep b2, where j is incremented by 3, is skipped and the process is continued in substep c2 checking the value of g(j). For g(j) greater than 1 the process is continued in substep b2 and for g(j) equal to 0 or 1 the process is lead up to the fine search step F at different substeps e2, d2 depending on the value of g(j). For g(j) equal to 1 the substep d2 checks the values of the two preceding bytes, wherein for g(j-1) and g(j-2) equal to 0 a start code is detected and the parsing is ended and otherwise the process is continued in substep b2. In substep e2 the value of g(j-1) is checked. If g(j-1) is equal to 0, the process is continued in substep h2, otherwise in the next substep f2 incrementing j by 1. The following substep g2 ckecks the value of g(j). If g(j) is not equal to 0, the process is continued in substep b2 of the rough search step. Otherwise j is again incremented by 1 in the next substep h2 and the value of the next byte g(j) is checked in substep i2. If the value of this next byte is equal to 0, the process is continued at substep h2, if the value of the next byte is neither equal to 0 nor equal to 1, the process is continued in substep b2. Finally, if g(j) is equal to 1, a start code is detected, wherein g(j+1) is the start code value of this start code.

Another variation of the fine search step (not shown in Figure 2) is to replace the substep d2 of the previous embodiment by the following two substeps d2' and d2''. In substep d2' j is decremented by 1. After that the value of g(j) is checked in substep d2'', wherein the process is continued for g(j) not equal to 0 in substep b2 of the rough search step and otherwise in substep e2.

A further variation of the fine search step (not shown in Figure 2) is to replace the substep d2 of the previous embodiment by a substep d2''', in which j is decremented by 1 and to continue after d2''' at substep c2.

However, the last described fine search step does not work in the case of
g(0) = 1 and
g(1) = 1 and
g(2) = 1.

A solution of this problem would be to replace the sub-step a2 of the previous embodiment by the following sub-steps a2', a2'' and a2'''. In sub-step a2' j is set to 1. After that sub-step a2'' increments j by 1 and is continued in sub-step a2'''. The value of g(j-1) is checked in sub-step a2''', wherein the process is continued for g(j-1) not equal to 1 in sub-step c2 of the rough search step and otherwise in sub-step a2''.

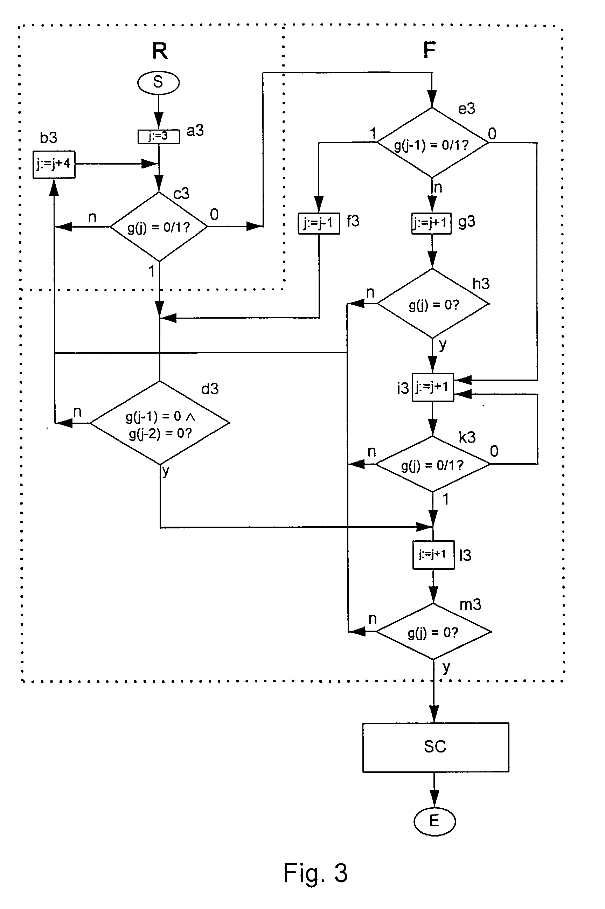

Figure 3 shows a method which searches directly for a picture_start_code of an MPEG stream by using the property of the picture start code to consist of a byte sequence of the values 0, 0, 1 and 0. After start S in rough search step R the value of j is set to 3 in the first sub-step a3. In the first run the sub-step b3, where j is incremented by 4, is skipped and the process is continued in sub-step c3 checking the value of g(j). For g(j) greater than 1 the process is continued in sub-step b3 and for g(j) equal to 0 or 1 the process is continued in the fine search step F at different sub-steps e3 or d3 depending on the value of g(j). For g(j) equal to 1 in sub-step d3 it is checked whether the values of the two preceding bytes g(j-1) and g(j-2) are equal to 0. In this case the parsing is continued in sub-step 13, otherwise in sub-step b3. If, according to sub-step c3, the value of g(j) is equal to 0, the process is continued in sub-step e3. In sub-step e3 the value of g(j-1) is checked and, depending on the value, different consequences result. For g(j-1) equal to 1 the variable j is decremented by 1 in sub-step f3 and the process is continued in sub-step d3. For g(j-1) equal to 0 the process is continued in sub-step i3 and for values of g(j-1) different to 0 or 1 j is incremented by 1 in sub-step g3 and the value of g(j) is checked in sub-step h3. For g(j) unequal to 0 the process is continued in sub-step b3, otherwise in sub-step i3 where j is incremented by 1. In sub-step k3 the value of the following byte g(j) is checked. For g(j) equal to 0 the process jumps back to sub-step i3. For g(j) equal to 1 the process is continued in sub-step 13 again incrementing j by 1 and otherwise the process is continued in sub-step b3. After sub-step 13 the value of the next following byte g(j) is compared to 0 in sub-step m3. If g(j) is unequal to 0 again a return to sub-step b3 follows, otherwise the start code is detected and the process is ended.

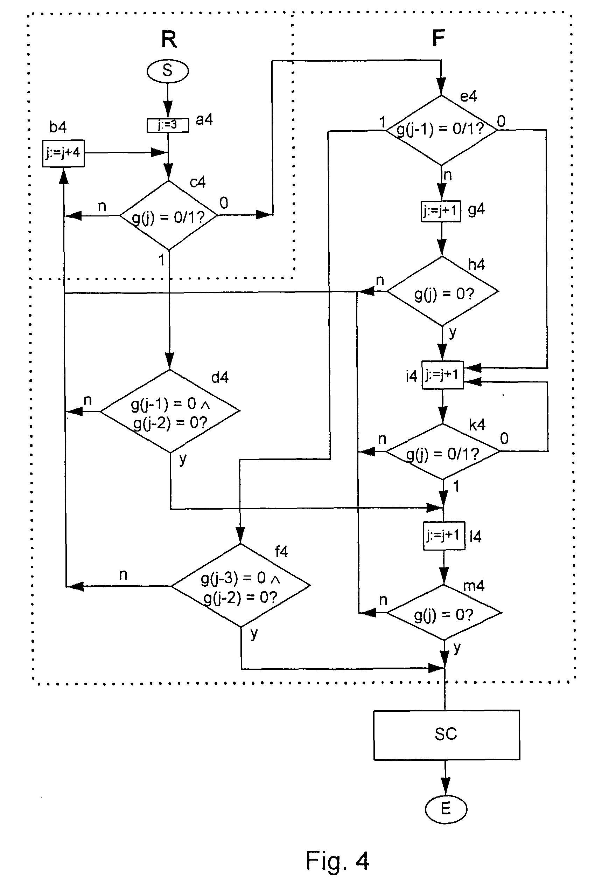

A little bit more complex but faster version of the method searching for a picture-start-code is described by figure 4. The sub-steps are essentially the same, i. e. the sub-steps a4 - c4, e4 - m4 are identical to a3 - c3 and e3 - m3. However, if sub-step e4 yields a value of g(j-1) of 1 instead of decrementing j in sub-step f3, a check of g(j-2) and g(j-3) is performed. If both, g(j-3) and g(j-2) are equal to 0 a start code is detected, otherwise the process is continued in sub-step b4.

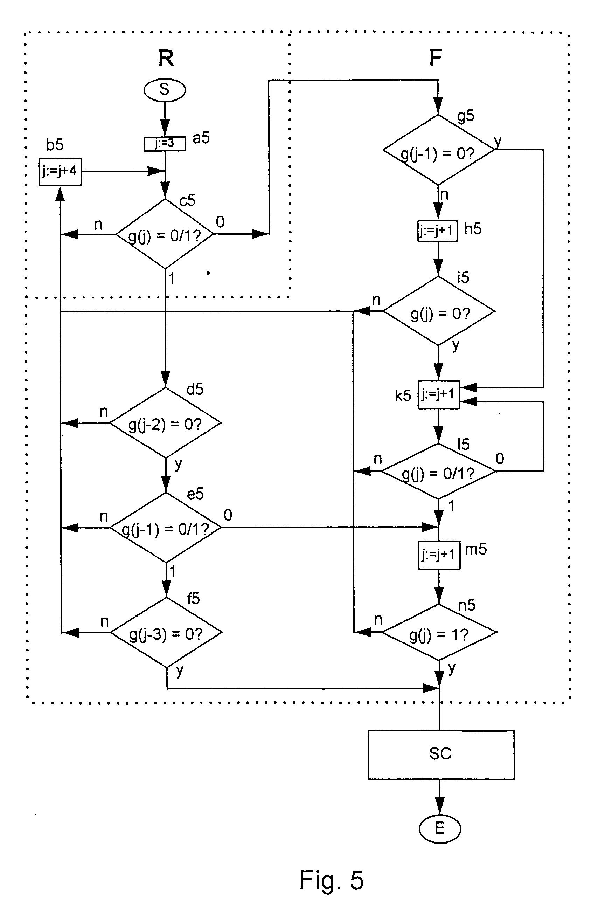

Figure 5 illustrates a method which searches directly for the start code of the first slice of an MPEG picture. It uses the property of the start code to consist of a byte sequence of the values 0, 0, 1 and 1. Sub-steps a5 - c5 are identical to those of figures 3 and 4. If the value of g(j) is equal to 1 in sub-step c5 the values of g(j-2), g(j-1) and g(j-3) are checked successively in the three sub-steps d5, e5 and f5. If g(j-2) is equal to 0 the process is continued in sub-step e5, otherwise in sub-step b5 of the rough search step. If g(j-1) is equal to 0 the process is continued in the sub-step m5 for g(j-1) equal to 1 in sub-step f5 and otherwise in sub-step b5. Finally, if g(j-3) is equal to 0 the start code is detected and the process is ended and otherwise a jump-back is performed to sub-step b5. Sub-steps g5 - n5 are essentially the same as for figures 3 and 4, the only difference is that in sub-step g5 also for g(j-1) equal to 1 a continuation in sub-step h5 is performed.

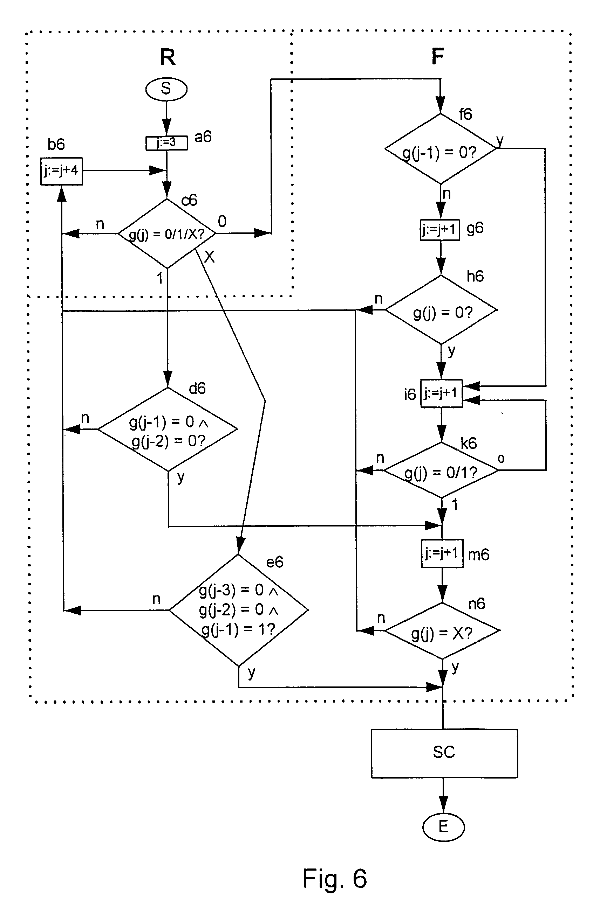

Figure 6 shows a method which searches directly for a special start code of an MPEG stream. The start code value must be between inclusively 2 and inclusively 255. This method uses the property of the start code to consist of a byte sequence of the values 0, 0, 1 and X, wherein X is one of the possible MPEG start code values greater or equal to 2. The sub-steps of figure 6 are basically the same as in figure 3, however, with the following differences. In sub-step c6 (corresponding to sub-step c3) g(j) is also compared with X. If g(j) is equal to X a check for the three preceding bytes is performed in sub-step e6. If g(j-3) is equal to 0 and g(j-2) is equal to 0 and g(j-1) is equal to 1 the start code is detected and the process is ended, otherwise the process is continued in sub-step b6 of the rough search step. Furthermore, in sub-step f6 (corresponding to sub-step e3) the process is continued in sub-step g6 (corresponding to g3) for all values of g(j-1) unequal to 0. Finally, in sub-step n6 (corresponding to sub-step m3) g(j) is compared to X instead of 0.

Especially the first search method is very useful for current micro processors, because most of the current micro processors are able to compare very fast a value with 0. The further search methods are especially useful for dedicated hardware parsers, because a comparison of an unsigned integer value with a fixed value greater than 0 is simple to realize as dedicated hardware.

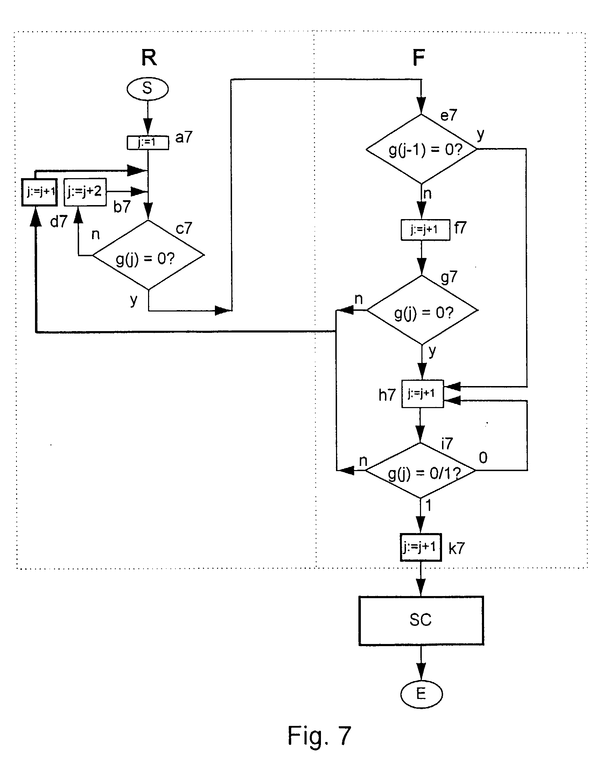

Figure 7 shows a modification of the first search method, wherein the modification is done for adaptation to an optimized C program. After start S first of all the variable j is set to 1 in sub-step a7. If g(j) is equal to 0 in sub-step c7 the process is continued in the fine search step F at sub-step e7. If, on the other hand, g(j) is unequal to 0 j is incremented by 2 in sub-step b7 and sub-step c7 is performed again. In the fine search step F the value of g(j-1) is compared to 0 in sub-step e7. If g(j-1) is equal to 0 the fine search step is continued in sub-step h7, otherwise j is incremented by 1 in sub-step f7 and the value of the following byte is checked in sub-step g7. If g(j) is equal to 0 in sub-step g7 j is incremented again by 1 in sub-step h7, otherwise a jump-back to the rough search step is performed, j is incremented by 1 in sub-step d7 and the process is continued in sub-step c7. Following sub-step h7 in the fine search step in sub-step i7 the value of g(j) is checked. For g(j) equal to 0 a jump-back to sub-step h7 is performed. For g(j) equal to 1 j is incremented by 1 in sub-step k7 and the start is detected and, finally, for g(j) unequal to 0 and 1 the process is continued in sub-step d7 of the rough search step.

A fixed memory area contains a part of an MPEG stream. This part shall be investigated for start codes. A C function returns the current state of investigation and the byte position of the start code value (if any) in the memory area. The function allows to continue the search in another memory part with a free selectable state, e.g. the state after the last memory part investigation.

The C function contains additional if-statements in order to detect the end of the investigated memory area. These if-statements are not showed in figure 7.

A possible variation could be to increment the pointer "memoryPart" itselves inside the C program, instead of using the index "iMemoryPart". Using of local pointers instead of the direct using of function arguments could also increase the execution speed of the C program. Such optimizations depend on the kind of used micro processor(s).

The following source text is the C program:

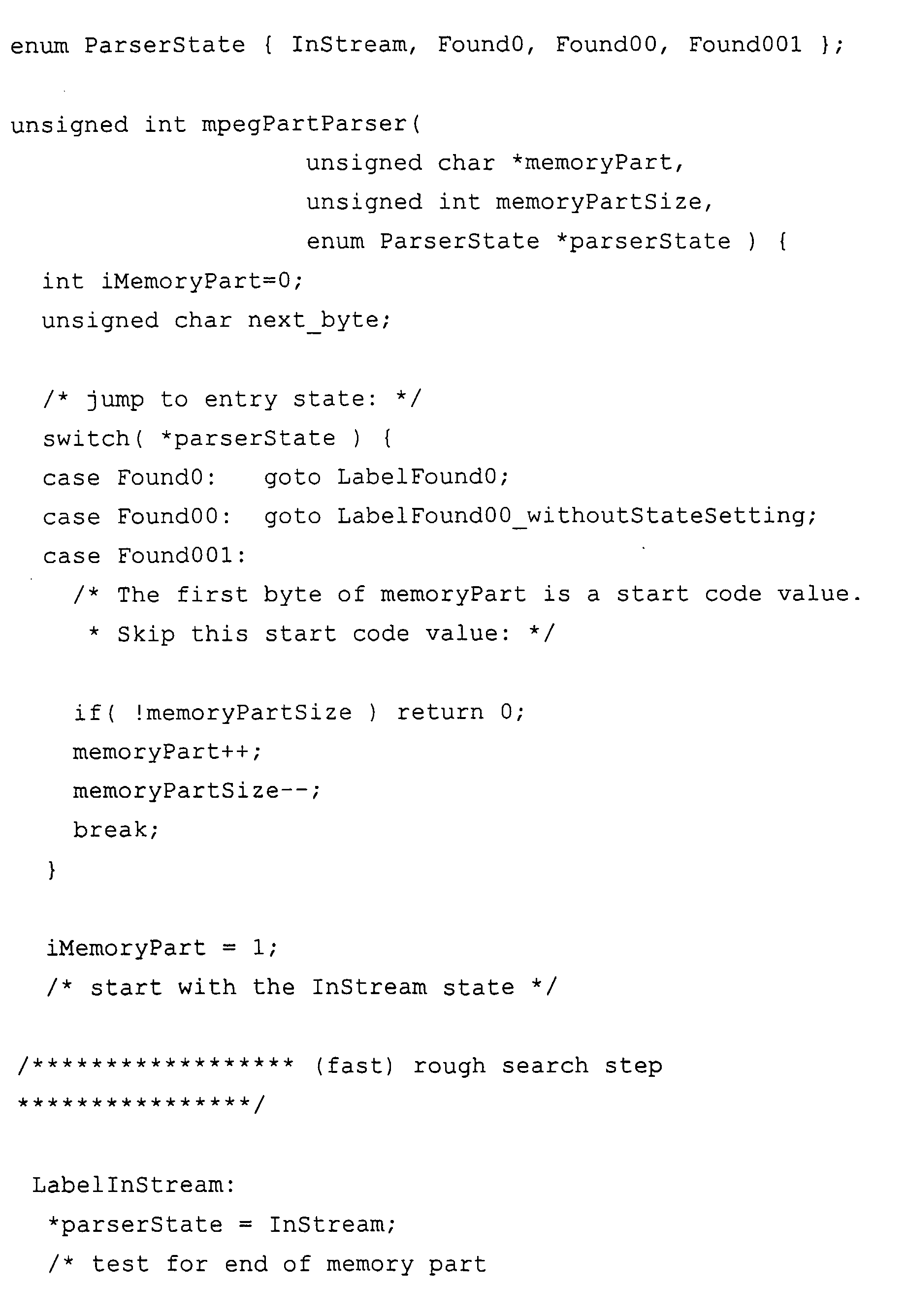

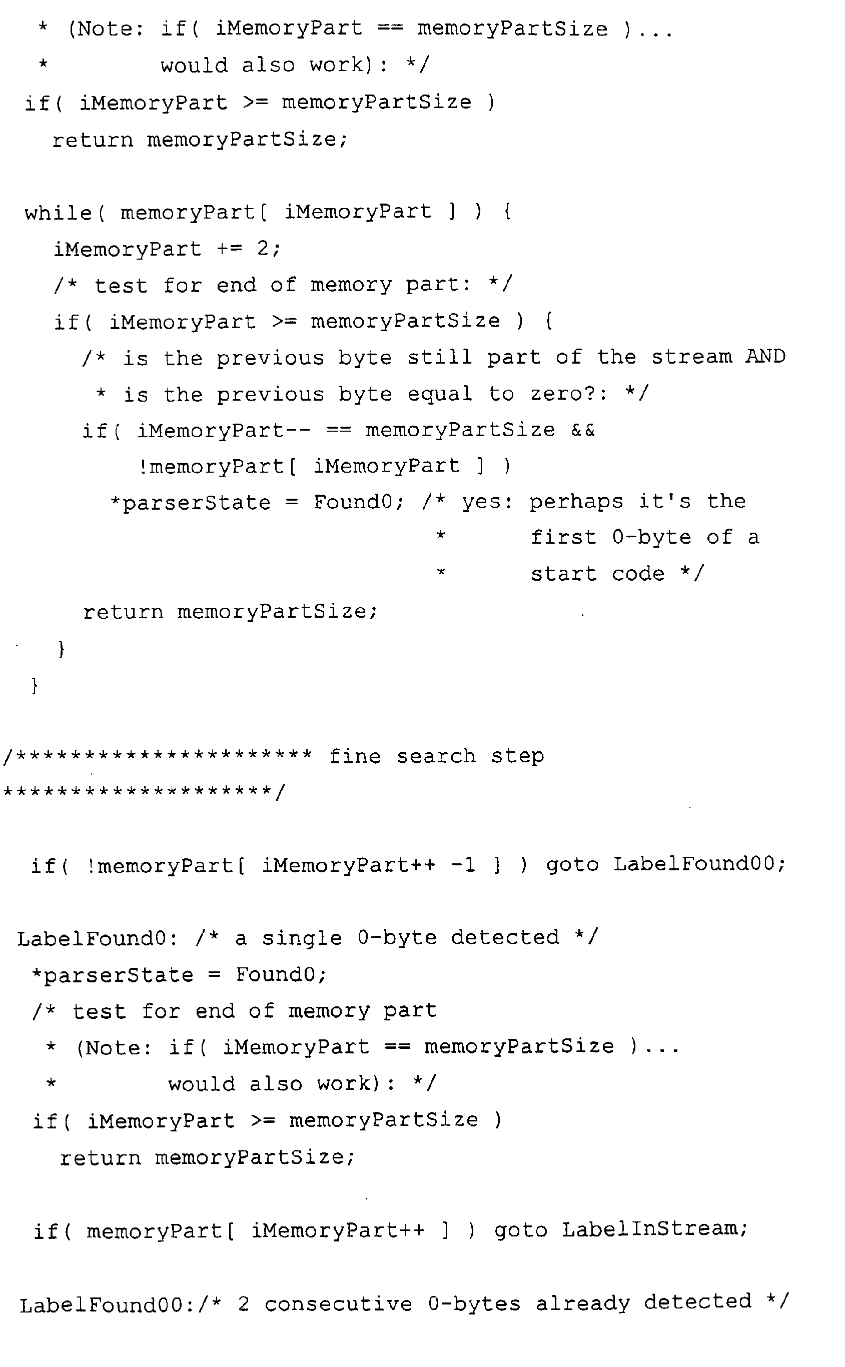

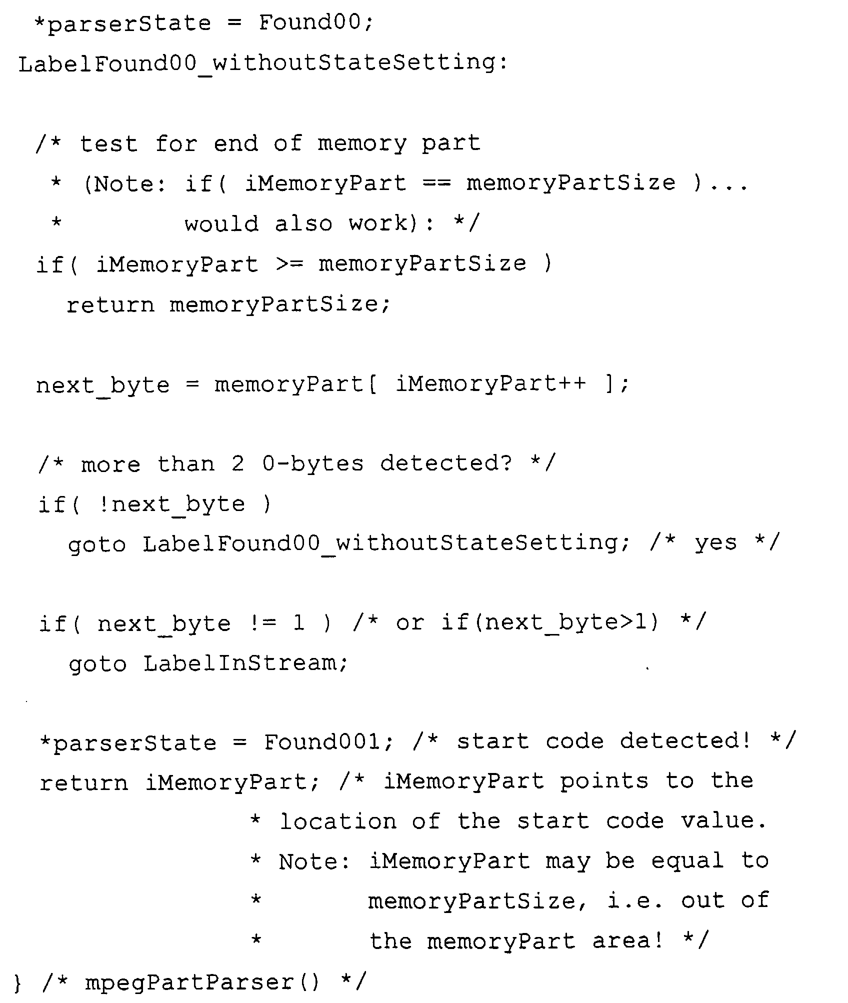

The function mpegPartParser() returns the location of the first byte after the last investigated byte relative to the start of the investigated memory part, described by the pointer argument memoryPart. If a start code is detected, then the return value points to the start code value, which is located after the 0-0-1 byte sequence, relative to the start of the investigated memory part, described by the pointer argument memoryPart. Furthermore, memoryPart must contain a valid pointer, e.g. a NULL pointer is not allowed, and memoryPartSize is the byte size of the memory part. ParserState is the current state, defined as enum ParserState and will be changed to the last state of the investigation, e.g. parserState==Found001 means: start code detected.

The following variation of the C function is also useful. This C function assumes, that the first 2 bytes after the memory area are changeable by the C function itselves during the investigation. These 2 bytes will be used for inserting stop marks for the fast rough search step. The advantage in comparison to the former C function is a faster rough search step, because no additional if-statements for memory part end detection are necessary.

There are many possible variations of this C function example, e.g. that the last two bytes of the memory area are used as stop marks for the rough search step. After arriving of these last two bytes of the memory area during searching, the 2 bytes will be restored and a byte oriented start code search could start in order to complete the search.

Another variation could be to increment the pointer "memoryPart" itselves inside the C program, instead of using the index "iMemoryPart". Using of local pointers instead of the direct using of function arguments could also increase the execution speed of the C program. Such optimizations depend on the kind of used micro processor(s).

The following source text is the C program:

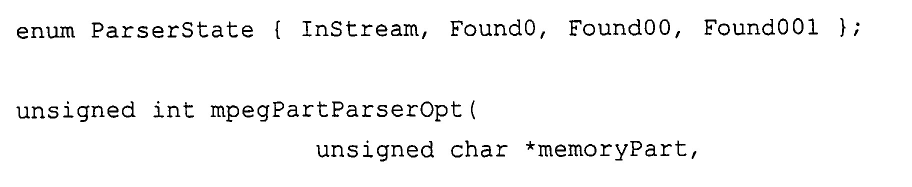

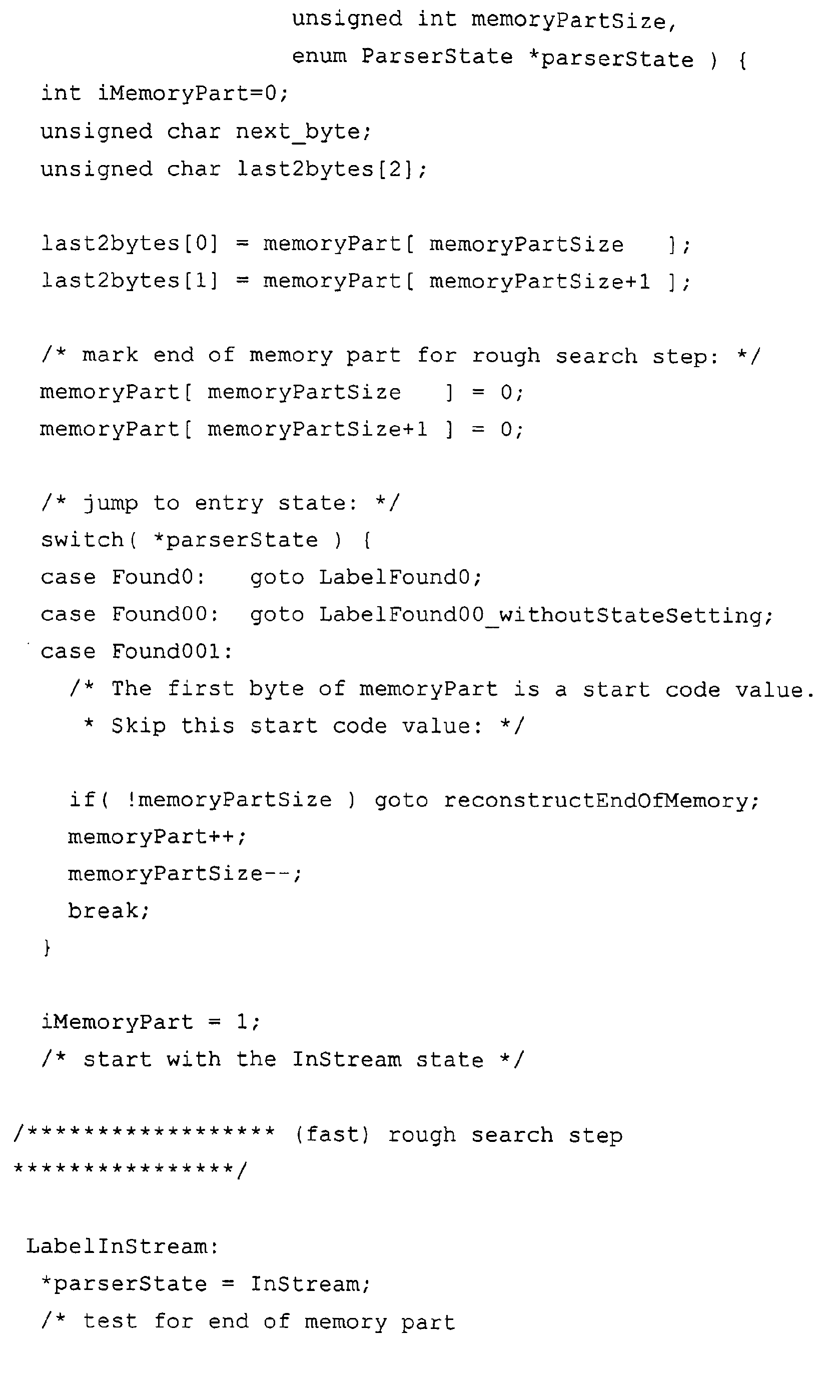

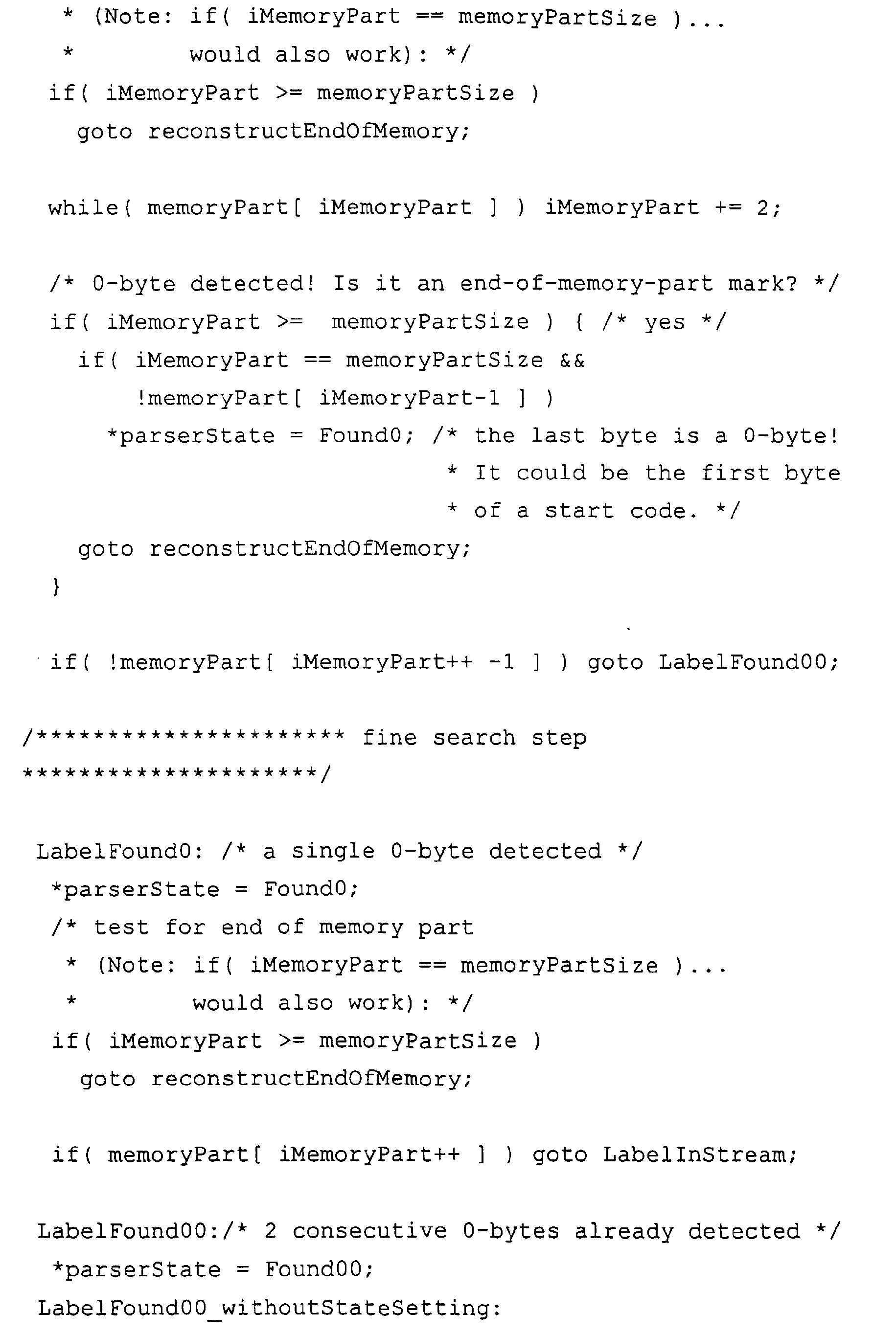

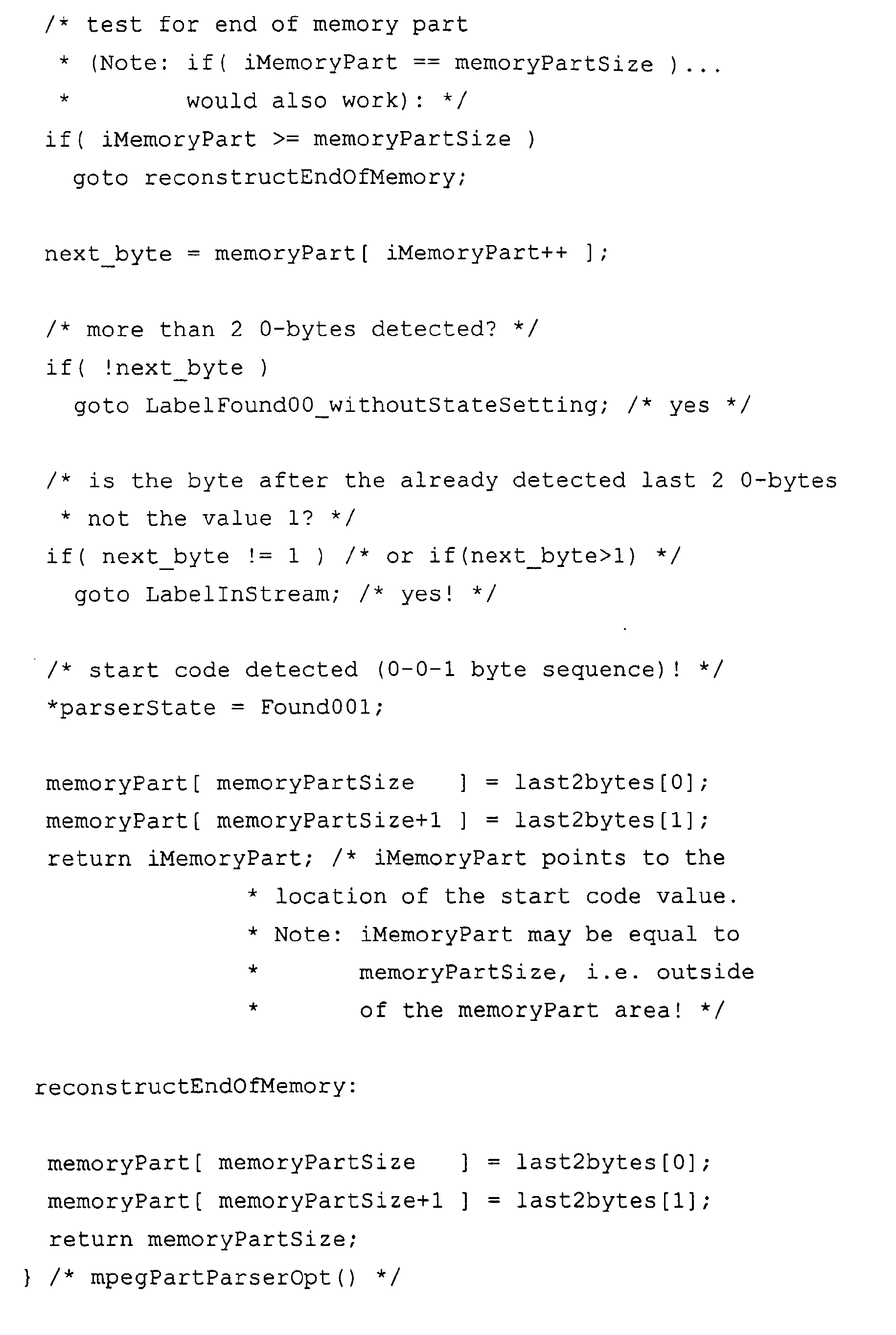

To increase the speed of the rough search step the last 2 bytes just behind memoryPart will be set to 0. So, it is guranteed, that the rough search step will not overrun these 2 0-bytes and the rough search step itselves can be speeded up. Just before mpegPartParserOpt() returns the 2 bytes just behind memoryPart will be restored.

Finally, the C function can be modified in such a way that it directly searches for I, P and B pictures in MPEG stream parts.

The invention can advantageously be used for trick modes or fast search at playback of MPEG coded video data, which are stored on media like Video CDs od DVDs and are played back e. g. by a DVD player.

However, the invention is not restricted to MPEG coded video signals but also applies to video, audio or data signals coded by other bit-rate saving algorithms.

## Claims

1. Method for searching start codes in a data stream of coded audio and/or visual information in digital compressed format, **characterized** in that the search includes a rough search step (R) and a fine search step (F), wherein the fine search step (F) is only performed, if the rough search step (R) detects a predefined structure of a partition of the data stream.

2. Method according to claim 1, **characterized** in that the rough search step (R) investigates each n-th byte of the data stream and the fine search step (F) investigates each m-th byte of the data stream and that n, m are integers with n>m.

3. Method according to claim 2, **characterized** in that the values of n, m are n>=2 and m=1.

4. Method according to any of claims 1 to 3, **characterized** in that the rough search step (R) uses the property of MPEG start codes to begin with three bytes having the values 0, 0 and 1.

5. Method according to claim 4, **characterized** in that a search for a possible MPEG start code of an MPEG stream is performed by using the property of this start code to consist of a byte sequence of the values 0, 0, 1 and X, wherein X is an integer between 0 and 255.

6. Method according to claim 5, **characterized** in that a search for a picture start code of an MPEG stream is performed by using the property of the picture start code to consist of a byte sequence of the values 0, 0, 1 and 0.

7. Method according to claim 5, **characterized** in that a search for the start code of the first slice of a MPEG picture is performed by using the property of a slice start code to consist of a byte sequence of the values 0, 0, 1 and 1.
